# EUROPEAN PATENT APPLICATION

(11) **EP 4 431 438 A1**
(43) Date of publication of application: **18.09.2024**
(21) Application number: 23895570.2
(22) Date of filing: 29.05.2023
(51) Int. Cl.: B66C 13/12, B60L 50/60

(54) **DRIVE SYSTEM, CRANE DRIVE SYSTEM, WORK MACHINE AND CRANE**

(30) Priority: 31.01.2023 CN 202320183713 U
(71) Applicant: Sany Automobile Hoisting Machinery Co., Ltd, Changsha, Hunan 410600 (CN)
(72) Inventor: XIE, Wenshang, Changsha, Hunan 410600 (CN); ZHANG, Jinhu, Changsha, Hunan 410600 (CN); YUAN, Anfa, Changsha, Hunan 410600 (CN)
(74) Representative: Puchberger & Partner Patentanwälte
(86) International application number: PCT/CN2023/096935
(87) International publication number: WO 2024/159667

(57) **Abstract**

The present application relates to the technical field of work machines, and provides a driving system, a crane driving system, a work machine, and a crane. The driving system includes an uppercarriage driving system and an undercarriage driving system, wherein the uppercarriage driving system includes uppercarriage driving motors, uppercarriage controllers, a high-voltage battery pack, a BDU (Battery Disconnect Unit) and an uppercarriage PDU (Power Distribution Unit), and the uppercarriage PDU is connected to the uppercarriage controller; the undercarriage driving system includes an undercarriage PDU, an engine, a power generator, undercarriage driving motors and undercarriage controllers, the engine is connected to the power generator, the power generator is connected to a walking motor among the undercarriage driving motors, and the undercarriage PDU is connected to the uppercarriage PDU and the undercarriage controller.

## Description

The present application claims priority to Chinese Patent Application No. 202320183713. 0, filed on Jan. 31, 2023, the entire contents of which are incorporated herein by reference.

### TECHNICAL FIELD

The present invention relates to the technical field of work machines, and particularly to a driving system, a crane driving system, a work machine, and a crane.

### BACKGROUND

With development of a construction machine technology and as oil being a non-renewable resource, along with improvement of emission requirements, electrification will become a development trend of work machines.

Most of existing work machines use a traditional internal combustion engine as a power source. However, fuel economy is not high during work, and emission pollution is caused, which runs counter to a current concept of environmental protection and forms resistance to sustainable development of energy. However, although a work machine only using pure electricity as a power source avoids emission pollution, the work machine is also limited by driving mileage. Therefore, in the case of no driving mileage worries, a main engine needs to install more power batteries, the expensive batteries will inevitably increase cost, which is difficult for customers to accept.

A plug-in hybrid electric work machine not only overcomes the high cost of a pure electric drive work machine, but also takes into account a good fuel economy, and has the advantage of right of way, which is a mainstream direction of future development of a work machine. However, at present, electric energy provided by a power battery is only used as a power source when the plug-in hybrid electric work machine is running, and fuel is still needed as a power source for uppercarriage work, and therefore, the current plug-in hybrid electric work machine still has problems of low fuel economy, emission pollution and high noise.

### SUMMARY OF THE INVENTION

### Technical problems

The present application provides a driving system, a crane driving system, a work machine, and a crane, which are used for solving defects of low fuel economy and emission pollution caused by the fact that a hybrid work machine in the prior art still adopts fuel as a power source to drive uppercarriage work, and realizing to use a power battery as a power source for uppercarriage work, so as to improve the use economy of the work machine and reduce the emission pollution.

### Technical solutions

The present application provides a driving system, which includes an uppercarriage driving system and an undercarriage driving system, wherein,
the uppercarriage driving system includes a plurality of uppercarriage driving motors, a plurality of uppercarriage controllers configured to control the uppercarriage driving motors, a high-voltage battery pack, a BDU (Battery Disconnect Unit) and an uppercarriage PDU (Power Distribution Unit);
the uppercarriage PDU is connected to each uppercarriage controller, and is configured to distribute electric energy provided by the high-voltage battery pack to each uppercarriage controller after passing through the BDU, so as to enable each uppercarriage controller to control a corresponding uppercarriage driving motor to drive each action execution mechanism of an uppercarriage to operate;
the undercarriage driving system includes an undercarriage PDU, an engine, a power generator, a plurality of undercarriage driving motors and a plurality of undercarriage controllers configured to control the undercarriage driving motors, the engine is connected to the power generator, the power generator is connected to a walking motor among the undercarriage driving motors by means of a clutch, the undercarriage PDU is respectively connected to the uppercarriage PDU and each undercarriage controller and is configured to distribute electric energy distributed by the uppercarriage PDU, together with electric energy converted from the engine, to each undercarriage controller, so as to enable each undercarriage controller to control a corresponding undercarriage driving motor to drive each action execution mechanism of an undercarriage to act.

In one embodiment, the uppercarriage PDU is respectively connected to an air-conditioning compressor controller and an electric heating controller of the uppercarriage.

In one embodiment, the undercarriage PDU is connected to an air-conditioning compressor controller of the undercarriage.

In one embodiment, the driving system further includes an on-board charger;
the on-board charger is respectively connected to the undercarriage PDU and a charging interface arranged on the undercarriage; when the on-board charger is connected to an external power supply, the undercarriage PDU distributes electric energy provided by the external power supply to the uppercarriage PDU, the uppercarriage PDU then distributes the electric energy to each uppercarriage controller, so as to enable each uppercarriage controller to control the corresponding uppercarriage driving motor to drive each action execution mechanism of the uppercarriage to operate.

In one embodiment, the undercarriage PDU is connected to the uppercarriage PDU by means of an electrical slip ring.

The present application further provides a crane driving system, which includes the driving system according to any one of the above, wherein
the uppercarriage driving motors include a rotary motor, an operation oil pump motor and a winch motor; and
the uppercarriage controllers include a rotary controller, an operation oil pump controller and a winch controller, and the operation oil pump controller and the winch controller are integrated with the uppercarriage PDU to form a first all-in-one controller.

In one embodiment, the first all-in-one controller further internally includes a DC/DC module;
the DC/DC module is connected to the uppercarriage PDU.

In one embodiment, the undercarriage driving motors further include a steering oil pump motor and an electric air compressor;
the undercarriage controllers include a walking controller, a steering controller, and an air pump controller; and the steering controller and the air pump controller are integrated with the undercarriage PDU to form a second all-in-one controller.

The present application further provides a work machine, which includes the driving system according to any one of the above.

The present application further provides a crane, which includes the driving system according to any one of the above, or includes the crane driving system according to any one of the above.

### Beneficial effects

According to the driving system, the crane driving system, the work machine and the crane provided in the present application, by separately arranging the uppercarriage driving system which includes the uppercarriage driving motors configured to respectively drive each action execution mechanism of the uppercarriage, the plurality of uppercarriage controllers configured to control the uppercarriage driving motors, the high-voltage battery pack, the BDU (Battery Disconnect Unit) and the uppercarriage PDU (Power Distribution Unit), and arranging the undercarriage driving system which includes the undercarriage PDU, the engine, the power generator, the plurality of undercarriage driving motors configured to respectively drive each action execution mechanism of the undercarriage and the plurality of undercarriage controllers configured to control the undercarriage driving motors, enabling the engine to be connected to the power generator, enabling the power generator to be connected to the walking motor among the undercarriage driving motors by means of a clutch, and enabling the undercarriage PDU to be respectively connected to the uppercarriage PDU and each undercarriage controller, pure electric work of the uppercarriage and parallel hybrid electric driving of the undercarriage are thus realized, potential energy during work of the uppercarriage can be recovered for electric energy supplement of the high-voltage battery pack, an oil saving rate of the work machine is ensured, the emission pollution is reduced, and by the pure electric operation of the uppercarriage, work noise of the work machine is effectively reduced, and the work environment of an operator is improved.

### BRIEF DESCRIPTION OF THE DRAWINGS

In order to more clearly illustrate technical solutions of the present application or the prior art, the accompanying drawings to be used in the description of the embodiments or the prior art will be briefly introduced below, and it will be apparent that the accompanying drawings in the following description are some of the embodiments of the present application, and those skilled in the art can also obtain other drawings from these drawings without creative work.
FIG. 1 is a first structural schematic diagram of a driving system provided in an embodiment of the present application;
FIG. 2 is a second schematic structural diagram of a driving system provided in an embodiment of the present application;
FIG. 3 is a first structural schematic diagram of a crane driving system provided in an embodiment of the present application;
FIG. 4 is a second schematic structural diagram of a crane driving system provided in an embodiment of the present application;
FIG. 5 is a structural schematic diagram of an example of a crane driving system provided in an embodiment of the present application.

### Reference numerals:

10: Uppercarriage driving system; 11: Uppercarriage driving motor; 111: Rotary motor; 112: Operation oil pump motor; 113: Winch motor; 12: Uppercarriage controller; 120: First all-in-one controller; 121: Rotary controller; 122: Operation oil pump controller; 123: Winch controller; 124: DC/DC module; 13: High-voltage battery pack; 14: BDU; 15: Uppercarriage PDU; 16: Air-conditioning compressor controller of the uppercarriage; 17: Electric heating controller; 21: Undercarriage PDU; 22: Engine; 23: Power generator; 24: Undercarriage driving motor; 241: Walking motor; 242: Steering oil pump motor; 243: Electric air compressor; 25: Undercarriage controller; 250: Second all-in-one controller; 251: Walking controller; 252: Steering controller; 253: Air pump controller; 26: Air-conditioning compressor controller of the undercarriage; 27: On-board charger; 28: charging interface; 29: Electrical slip ring.

### DETAILED DESCRIPTION

In order to make objectives, technical solutions and advantages of the present application clearer, the technical solutions in the present application will be clearly and completely described below in conjunction with the drawings of the present application. Apparently, the described embodiments are part of, but not all of, the embodiments of the present application. Based on the embodiments of the present application, all other embodiments obtained by those of ordinary skill in the art without creative work are included in the protection scope of the present application.

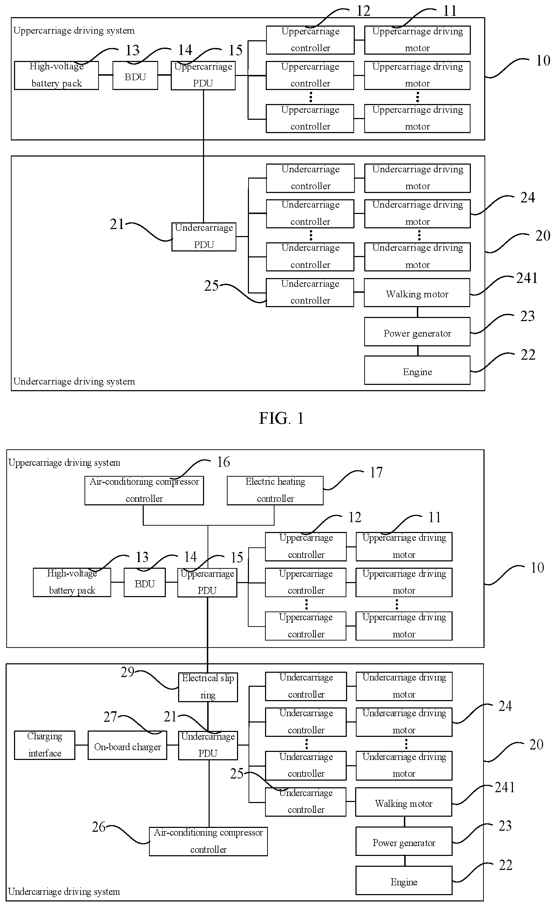

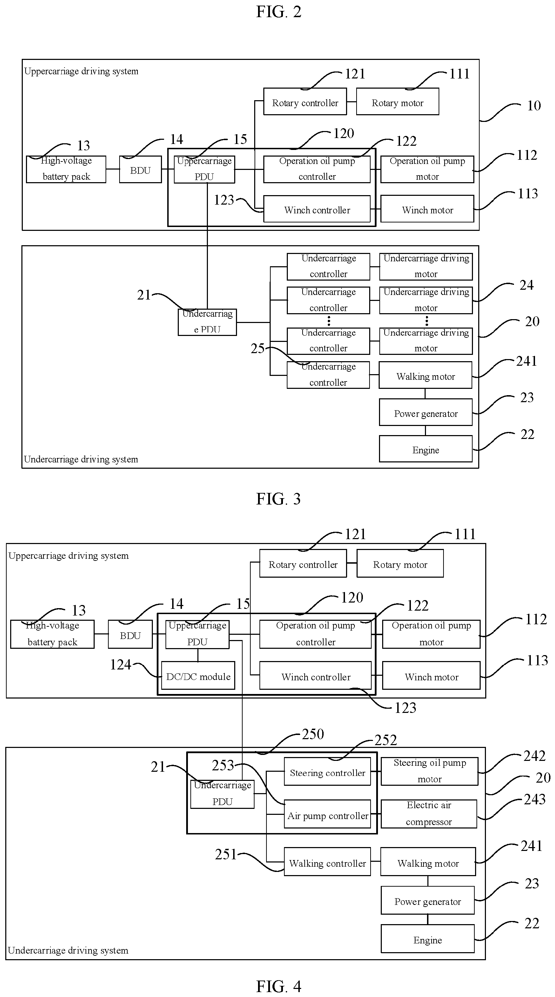

A driving system of the present application is described below with reference to FIGs. 1 and 2. As shown in FIG. 1, the driving system includes an uppercarriage driving system 10 and an undercarriage driving system 20;
the uppercarriage driving system 10 includes a plurality of uppercarriage driving motors 11, a plurality of uppercarriage controllers 12 configured to control the uppercarriage driving motors 11, a high-voltage battery pack 13, a BDU 14 and an uppercarriage PDU 15;
the uppercarriage PDU 15 is connected to each uppercarriage controller 12, and is configured to distribute electric energy provided by the high-voltage battery pack 13 to each uppercarriage controller 12 after passing through the BDU 14, so as to enable each uppercarriage controller 12 to control a corresponding uppercarriage driving motor 11 to drive each action execution mechanism of an uppercarriage to operate;
the undercarriage driving system 20 includes an undercarriage PDU 21, an engine 22, a power generator 23, a plurality of undercarriage driving motors 24 and a plurality of undercarriage controllers 25 configured to control the undercarriage driving motors 24, the engine 22 is connected to the power generator 23, the power generator 23 is connected to a walking motor 241 among the undercarriage driving motors 24 by means of a clutch, the undercarriage PDU 21 is respectively connected to the uppercarriage PDU 15 and each undercarriage controller 25 and is configured to distribute electric energy distributed by the uppercarriage PDU 15, together with electric energy converted from the engine 22, to each undercarriage controller 25, so as to enable each undercarriage controller 25 to control a corresponding undercarriage driving motor 24 to drive each action execution mechanism of an undercarriage to act.

It can be understood that a work machine such as an excavator, a crane and the like is composed of an uppercarriage and an undercarriage, wherein the uppercarriage is used for engineering work and includes a plurality of action execution mechanisms for realizing work actions, for example, the excavator includes a movable arm, a bucket, a bucket rod and the like, and the undercarriage is mainly used for walking and also includes a plurality of action execution mechanisms for realizing actions, such as a chassis driving system, a steering system, and the like.

Specifically, a traditional motor work mode of the uppercarriage is changed into motor drive, namely, the uppercarriage driving system is configured to include the uppercarriage driving motors for respectively driving each action execution mechanism of the uppercarriage, the plurality of uppercarriage controllers for controlling each uppercarriage driving motor, the high-voltage battery pack, the BDU and the uppercarriage PDU, and the uppercarriage PDU is connected to each uppercarriage controller, the electric energy of the high-voltage battery pack, after passing through the BDU, can be distributed to each uppercarriage driving motor of the uppercarriage by means of the uppercarriage PDU, thereby realizing pure electric work of the work machine.

More specifically, the undercarriage driving system is configured to include the undercarriage PDU, the engine, the power generator, the plurality of undercarriage driving motors configured to respectively drive each action execution mechanism of the undercarriage and the plurality of undercarriage controllers configured to control the undercarriage driving motors, the engine is connected to the power generator, the power generator is connected to the walking motor among the undercarriage driving motors by means of the clutch, the undercarriage PDU is connected to each undercarriage controller, and thus, when the clutch is combined, the walking motor is connected to the engine, the engine can be used to drive the work machine to walk. Connection of the uppercarriage PDU and the undercarriage PDU ensures that the electric energy of the high-voltage battery pack, after passing through the BDU, can be firstly distributed to the undercarriage PDU of the undercarriage by means of the uppercarriage PDU and then distributed to each undercarriage driving motor of the undercarriage by means of the undercarriage PDU. The walking motor among the undercarriage driving motors can transmit the power to a gearbox of the work machine, so as to enable the gearbox to transmit the power to a transfer case by means of a transmission shaft, and then enable the transfer case to transmit the power to an axle by means of the transmission shaft, thereby realizing the work machine running in the hybrid electric mode, and the uppercarriage and the undercarriage sharing one high-voltage battery pack.

It should be noted that, in a default state, the work machine runs in the hybrid electric mode to supplement the power of the high-voltage battery pack through energy recovery, thereby improving the fuel saving rate of the work machine. However, when the pure electric mode is triggered, the work machine can also run in the pure electric mode by disengaging the clutch. A triggering mode of the pure electric mode can be set in any form. For example, a pure electric running button is set on a touch screen in a control room, and the pure electric mode is triggered when a driver presses the pure electric running button.

Furthermore, through the connection of the engine and the power generator, on one hand, the high-voltage battery pack can be charged by the engine, and on the other hand, the energy generated in the running process and the potential energy generated during the work of the work machine can be recovered to supplement the power of the high-voltage battery pack, thereby improving the oil saving rate of the work machine.

Still furthermore, the uppercarriage driving system and the undercarriage driving system are separately arranged and then are connected, so as to conveniently arrange the driving system and conveniently find a fault reason when a fault occurs, thereby improving maintenance efficiency.

It is to be understood that the uppercarriage controller and the undercarriage controller may be MCUs (Motor Control Units). Charging of the high-voltage battery pack can be controlled according to a SOC (State of Charge, namely, remaining power) of the high-voltage battery pack. For example, when the SOC of the high-voltage battery pack reaches a lower limit of a preset power, the engine of the undercarriage can perform extended range charging for the uppercarriage, and at the same time, uppercarriage work can be performed while the high-voltage battery pack performs charging. And the extended range charging is stopped when the SOD of the high-voltage battery pack reaches the upper limit of the preset power. For the recovery of the energy generated during the running of the work machine, an energy recovery torque can be comprehensively judged according to a brake pedal opening, a vehicle speed and a reverse input torque of a rear axle, and then whether to recover the energy can be determined. For example, when the vehicle speed is high and the brake pedal opening is large, the energy can be recovered according to the preset torque idle of the walking motor.

The pure electric work of the uppercarriage and the parallel hybrid electric running of the undercarriage are realized, so that the potential energy during the uppercarriage work can be recovered for the electric energy supplement of the high-voltage battery pack, the oil saving rate of the work machine is ensured, the emission pollution is reduced, the work noise of the work machine is effectively reduced through the pure electric work of the uppercarriage, and the work environment of the operator is improved.

Based on the content of the above embodiment, as shown in FIG. 2, the uppercarriage PDU 15 is respectively connected to the air-conditioner compressor controller 16 and the electric heating controller 17 of the uppercarriage.

Specifically, the uppercarriage PDU is arranged to be respectively connected to the air-conditioner compressor controller and the electric heating controller of the uppercarriage to realize the power supply of the air conditioner and warm air of the control room of the uppercarriage.

Based on the content of the above embodiment, as shown in FIG. 2, the undercarriage PDU 21 is connected to the air-conditioning compressor controller 26 of the undercarriage.

Specifically, the undercarriage PDU is arranged to be connected to the air-conditioning compressor controller of the undercarriage to realize the power supply of the air conditioner of the undercarriage.

Based on the content of the above embodiment, as shown in FIG. 2, the driving system provided in an embodiment of the present application further includes an on-board charger 27.

The on-board charger 27 is respectively connected to the undercarriage PDU 21 and a charging interface 28 arranged on the undercarriage; when the on-board charger 27 is connected to an external power supply, the undercarriage PDU 21 distributes electric energy provided by the external power supply to the uppercarriage PDU 15, the uppercarriage PDU 15 then distributes the electric energy to each uppercarriage controller 12, so as to enable each uppercarriage controller 12 to control a corresponding uppercarriage driving motor 11 to drive each action execution mechanism of the uppercarriage to operate.

Specifically, as the charging interface on the undercarriage and the on-board charger (OBC) are arranged, the work machine can realize a plug-in work.

Based on the content of the above embodiment, as shown in FIG. 2, the undercarriage PDU 21 is connected to the uppercarriage PDU 15 by means of an electrical slip ring 29.

Specifically, the electric slip ring is dedicated to transmitting a power supply and a signal power supply during unlimited continuous rotation, and therefore, by connecting the uppercarriage PDU to the undercarriage PDU by means of the electric slip ring, rotation requirements, current transmission requirements and control signal transmission requirements of the work machine uppercarriage relative to the undercarriage can be simultaneously met.

A crane driving system, including the driving system according to any one of the above embodiments, of the present application is described below with reference to FIGs. 3 and 4. As shown in FIG. 3, the uppercarriage driving motor includes a rotary motor 111, an operation oil pump motor 112 and a winchmotor 113;
the uppercarriage controller includes a rotary controller 121, an operation oil pump controller 122 and a winch controller 123; and the operation oil pump controller 122 and the winch controller 123 are integrated with the uppercarriage PDU 15 to form a first all-in-one controller 120.

Specifically, by integrating the uppercarriage PDU, the operation oil pump controller, and the winch controller to form the first all-in-one controller, the crane driving system has the advantages of compact structure, light weight, high reliability, and convenient maintenance.

Based on the content of the above embodiment, the first all-in-one controller 120 further internally includes a DC/DC module 124; and
the DC/DC module 124 is connected to the uppercarriage PDU 15.

Specifically, by integrating the DC/DC module in the first all-in-one controller, the structure compactness of the crane driving system is further improved, and the all-in-one controller formed by integrating the rotary controller, the operation oil pump controller, the winch controller and the DC/DC module belongs to the existing applied all-in-one controller, which not only facilitates installation, but also avoids development cost for constructing a new all-in-one controller, thereby effectively reducing the cost of the crane driving system.

Based on the content of the above embodiment, as shown in FIG. 4, the undercarriage driving motor further includes a steering oil pump motor 242 and an electric air compressor 243;
the undercarriage controllers include a walking controller 251, a steering controller 252 and an air pump controller 253; and the steering controller 252 and the air pump controller 253 are integrated with the undercarriage PDU 21 to form a second all-in-one controller 250.

Specifically, by integrating the steering controller, the air pump controller, and the undercarriage PDU to form the second all-in-one controller, the structure compactness, the light weight, and the reliability of the crane driving system provided in the embodiments of the present application are further improved.

More specifically, the all-in-one controller formed by integrating the steering controller, the air pump controller, and the undercarriage PDU also belongs to the existing applied all-in-one controllers, thereby further reducing the cost of the crane driving system.

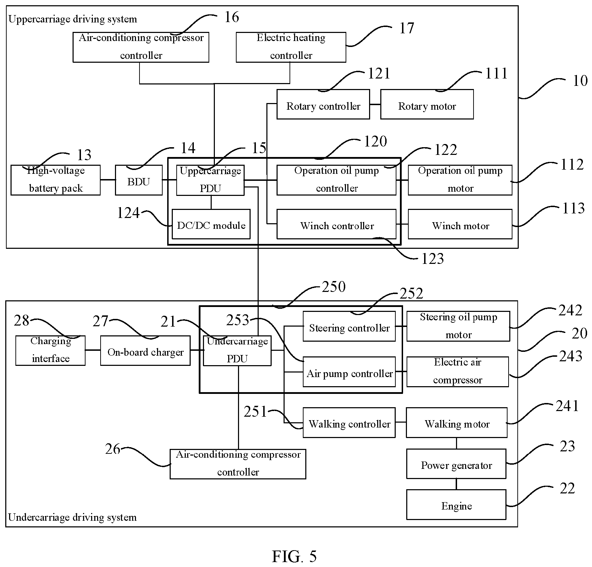

To sum up, the crane driving system provided in the embodiments of the present application may be as shown in FIG. 5. On one hand, through integrated design of the all-in-one controllers for the uppercarriage and the undercarriage, the whole driving system has the advantages of compact structure, light weight, high reliability, low cost, and convenient maintenance. On the other hand, during pure electric or plug-in work, the winch motor can generate electricity by using potential energy of a hoisted object, the electric energy is stored in the high-voltage battery pack, and therefore, the good oil saving rates of the uppercarriage and the undercarriage are realized by energy management of the undercarriage and recovery of the potential energy of the object by the winch motor of the uppercarriage, actual use requirements are met, and large-scale popularization and application are facilitated.

An embodiment of the present application further provides a work machine including the driving system according to any one of the above embodiments.

It is to be understood that the work machine including the driving system according to any one of the above embodiments provided in the embodiments of the present application has all the advantages and technical effects of the driving system provided in any one of the above embodiments, which are not repeated here.

Specifically, the work machine may be any work machine consisting of an uppercarriage and an undercarriage, such as a crane, an excavator, and the like.

An embodiment of the present application further provides a crane, including the driving system according to any one of the above embodiments, or including the crane driving system according to any one of the above embodiments.

It is to be understood that the crane, including the driving system according to any one of the above embodiments, or including the crane driving system according to any one of the above embodiments provided in the embodiments of the present application has all the advantages and technical effects of the driving system or the crane driving system provided in any one of the above embodiments, which are not repeated here.

Finally, it should be noted that the above embodiments are only used to illustrate the technical solutions of the present application, not to limit them. Although the present application has been described in detail with reference to the foregoing embodiments, those of ordinary skill in the art should understand that the technical solutions described in the foregoing embodiments can still be modified, or some of the technical features thereof can be equivalently replaced. These modifications or replacements do not make the essence of the corresponding technical solutions deviate from the spirit and scope of the technical solutions of the embodiments of the present application.

## Claims

1. A driving system, comprising an uppercarriage driving system and an undercarriage driving system, wherein,
the uppercarriage driving system comprises a plurality of uppercarriage driving motors, a plurality of uppercarriage controllers configured to control the uppercarriage driving motors, a high-voltage battery pack, a BDU (Battery Disconnect Unit) and an uppercarriage PDU (Power Distribution Unit);
the uppercarriage PDU is connected to each uppercarriage controller, and is configured to distribute electric energy provided by the high-voltage battery pack to each uppercarriage controller after passing through the BDU, so as to enable each uppercarriage controller to control a corresponding uppercarriage driving motor to drive each action execution mechanism of an uppercarriage to operate;
the undercarriage driving system comprises an undercarriage PDU, an engine, a power generator, a plurality of undercarriage driving motors and a plurality of undercarriage controllers configured to control the undercarriage driving motors, the engine is connected to the power generator, the power generator is connected to a walking motor among the undercarriage driving motors by means of a clutch, the undercarriage PDU is respectively connected to the uppercarriage PDU and each undercarriage controller and is configured to distribute electric energy distributed by the uppercarriage PDU, together with electric energy converted from the engine, to each undercarriage controller, so as to enable each undercarriage controller to control a corresponding undercarriage driving motor to drive each action execution mechanism of an undercarriage to act.

2. The driving system according to claim 1, wherein the uppercarriage PDU is respectively connected to an air-conditioning compressor controller and an electric heating controller of the uppercarriage.

3. The driving system according to claim 1, wherein the undercarriage PDU is connected to an air-conditioning compressor controller of the undercarriage.

4. The driving system according to claim 1, further comprising an on-board charger, wherein,
the on-board charger is respectively connected to the undercarriage PDU and a charging interface arranged on the undercarriage; when the on-board charger is connected to an external power supply, the undercarriage PDU distributes electric energy provided by the external power supply to the uppercarriage PDU, the uppercarriage PDU then distributes the electric energy to each uppercarriage controller, so as to enable each uppercarriage controller to control a corresponding uppercarriage driving motor to drive each action execution mechanism of the uppercarriage to operate.

5. The driving system according to claim 1, wherein the undercarriage PDU is connected to the uppercarriage PDU by means of an electrical slip ring.

6. A crane driving system, comprising the driving system according to any one of claims 1 to 5, wherein,
the uppercarriage driving motors include a rotary motor, an operation oil pump motor and a winch motor;
the uppercarriage controllers include a rotary controller, an operation oil pump controller and a winch controller; and
the operation oil pump controller and the winch controller are integrated with the uppercarriage PDU to form a first all-in-one controller.

7. The crane driving system according to claim 6, wherein the first all-in-one controller further internally comprises a DC/DC module; and
the DC/DC module is connected to the uppercarriage PDU.

8. The crane driving system according to claim 6, wherein,
the undercarriage driving motors further include a steering oil pump motor and an electric air compressor;
the undercarriage controllers include a walking controller, a steering controller, and an air pump controller; and
the steering controller and the air pump controller are integrated with the undercarriage PDU to form a second all-in-one controller.

9. A work machine, comprising the driving system according to any one of claims 1 to 5.

10. A crane, comprising the driving system according to any one of claims 1 to 5, or comprising the crane driving system according to any one of claims 6 to 8.
